# FASCICULE DE BREVET EUROPEEN

(11) **EP 2 115 022 B1**
(45) Date de publication et mention de la délivrance du brevet: **22.08.2012**
(21) Numéro de dépôt: 08762023.3
(22) Date de dépôt: 01.02.2008
(51) Int. Cl.: C08F 8/00, C08F 212/08, C08F 222/06, C08L 35/06, C08F 8/32

(54) **MATERIAU POLYMERE DE TYPE STYRENE / ANHYDRIDE, GREFFE AYANT DES PROPRIETES AMELIOREES**
STYREN-/ANHYDRIDPOLYMERMATERIAL UND TRANSPLANTAT MIT VERBESSERTEN EIGENSCHAFTEN
STYRENE/ANHYDRIDE POLYMERIC MATERIAL AND GRAFT HAVING ENHANCED PROPERTIES

(30) Priorité: 07.02.2007 FR 0753120
(43) Date de publication de la demande: 11.11.2009
(73) Titulaire: ARKEMA FRANCE, 92700 Colombes (FR); Centre National de la Recherche Scientifique, 75016 Paris (FR)
(72) Inventeur: DUFAURE, Nicolas, 27300 Bernay (FR); GRIMALDI, Sandra, F-69110 Sainte-Foy-les-Lyon (FR); HIDALGO, Manuel, F-69530 Brignais (FR); LEIBLER, Ludwik, F-75006 Paris (FR); TOURNILHAC, François-Genes, F-75012 Paris (FR)
(86) Numéro de dépôt international: PCT/FR2008/050163
(87) Numéro de publication internationale: WO 2008/099125

(56) Documents cités:
- EP-A- 0 393 899
- EP-A- 0 412 832
- EP-A- 1 342 764
- WO-A-2006/056690
- WO-A-2006/085007
- GB-A- 1 053 791
- US-A- 3 444 151
- US-A- 3 732 334
- US-A- 4 868 259
- US-A- 5 650 263

## Description

La présente invention se rapporte au domaine des matériaux polymères styréniques constitués de chaînes macromoléculaires greffées par des hétérocycles azotés, susceptibles de s'associer via des liaisons hydrogène. Elle concerne aussi les compositions comprenant de tels matériaux ainsi que leurs utilisations.

Les matériaux thermoplastiques sont utiles pour fabriquer des articles dans le domaine de l'industrie automobile et des transports, de l'industrie des appareils électriques, électroniques et électroménagers, de l'industrie de l'emballage comme l'emballage alimentaire utilisable dans des fours à micro-ondes, dans l'industrie de la construction et de la décoration, dans l'industrie mécanique et, en général, dans l'industrie des plastiques qui concerne des applications nombreuses et variées comme celles dans les jouets ou les articles de bureau.

L'une des familles de matériaux thermoplastiques les plus utilisés pour ces applications est celle des matériaux thermoplastiques styréniques rigides et, plus particulièrement, celle des matériaux thermoplastiques styréniques rigides et transparents, comme le polystyrène qui présente plusieurs avantages dans ce type d'application (propriétés optiques et mécaniques, faible coût, facilité de mise en oeuvre...), mais qui hélas ne présente pas une très grande résistance thermique ou aux solvants.

L'homme du métier a donc cherché à copolymériser le styrène avec d'autres monomères susceptibles d'apporter au copolymère final une amélioration de sa résistance thermique et aux solvants par rapport à l'homopolystyrène tout en gardant de bonnes propriétés de processabilité (capacité à être facilement transformable). Ainsi, le brevet US2971939 décrit un procédé de polymérisation permettant l'obtention de copolymères de styrène et d'anhydride maléique ou des mélanges d'un homopolymère de styrène avec un copolymère de styrène et d'anhydride maléique, ayant une température de déformation à la chaleur améliorée tout en conservant la processabilité du matériau.

La demanderesse a maintenant trouvé un nouveau matériau polymère présentant des propriétés thermiques (ex : température de transition vitreuse) et/ou de résistance aux solvants améliorées tout en conservant ou en améliorant également ses propriétés mécaniques (ex : les modules mécaniques) et rhéologiques (ex : la viscosité capillaire ou la viscosité à bas taux de cisaillement) par rapport au matériau polymère de l'état de la technique mentionné ci-dessus.

L'invention a pour objet un copolymère greffé issu du greffage :
- d'un copolymère (II) issu de la copolymérisation d'au moins deux monomères, (i) le premier monomère étant choisi parmi le styrène et ses dérivés et (ii) le second monomère comportant au moins une fonction anhydride,
- par des molécules M-R-X (I) comportant au moins un motif (M) choisi parmi les motifs (1) à (4) : 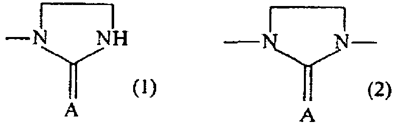 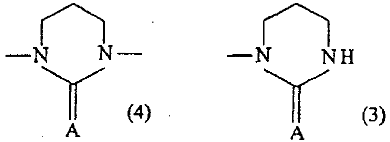
avec A = oxygène, soufre ou NH ;
et comportant au moins une fonction chimique (X) choisie parmi un halogène, une fonction amine primaire ou secondaire, une fonction alcool, une fonction thiol, une fonction acide carboxylique ou un dérivé de cette fonction et une fonction époxy, le motif (M) et ladite fonction (X) étant reliés par une chaîne rigide ou flexible (R).

Selon un mode de réalisation, le copolymère greffé est caractérisé en ce que le copolymère (II) servant de squelette à greffer, est issu de la copolymérisation d'un mélange de monomères comprenant entre 0,5 et 50% (% en poids par rapport au mélange total de monomères) de monomère comportant une fonction anhydride.

Selon un mode de réalisation, le copolymère (II) est caractérisé en ce que le monomère comportant une fonction anhydride est l'anhydride maléique.

Selon un mode de réalisation, le copolymère greffé est caractérisé en ce que les molécules (I) sont issues de la réaction de l'urée avec au moins un composé choisi parmi les alkylèneamines, les amines, les aminoalcools et les amides.

Selon un mode de réalisation, le copolymère greffé est caractérisé en ce que les molécules (I) sont issues de la réaction de l'urée avec au moins un composé contenant au moins une fonction amine primaire (-NH2) et au moins une fonction amine secondaire (- NH-), lesdites fonctions étant reliées par une chaîne carbonée comprenant au moins 2 atomes de carbone.

Selon un mode de réalisation, le copolymère greffé est caractérisé en ce que la fonction (X) est une fonction amine primaire ou secondaire ou une fonction alcool.

Selon un mode de réalisation, le copolymère greffé est caractérisé en ce que le motif (M) de la molécule (I) est le motif (1) qui est un hétérocycle de type imidazolidone avec A=oxygène.

Selon un mode de réalisation, le copolymère greffé est caractérisé en ce que la molécule (I) est choisie parmi la molécule UTETA, la molécule UTEPA et la molécule UDETA.

Selon un mode de réalisation, le copolymère greffé est caractérisé en ce que la chaîne (R) est une chaîne alkyle linéaire ou ramifiée composée de un à 30 atomes de carbone, un cycle ou une succession de radicaux alkyl ou aryl unis par des ponts-C(O)O-, OC(O), C(O), -O-, -S-, -NH- avec, de préférence, une masse moléculaire de R inférieure à 1000 g/mole et de manière tou à fait préférée inférieure à 500 g/mole.

Selon un mode de réalisation, le copolymère greffé est caractérisé en ce que le nombre moyen de « greffons » est supérieur à 2 « greffons » par chaîne macromoléculaire.

L'invention a également pour objet une composition comprenant un copolymère greffé défini précédemment et au moins un autre polymère.

L'invention a aussi trait à l'utilisation du copolymère greffé mentionné plus haut ou de la composition évoquée ci-dessus pour fabriquer des articles destinés aux domaines de l'automobile, des transports, de l'électricité, de l'électronique, de l'informatique, du médical, de l'emballage, y compris l'emballage alimentaire utilisable en micro-ondes, de la décoration, de la construction, de la mécanique, des jouets, de l'électroménager.

Selon un mode de réalisation, l'invention concerne l'utilisation du copolymère greffé en tant :
- qu'agent de compatibilisation dans des mélanges de polymères
- comme composant d'un mélange maître polymère-additifs utilisé pour l'additivation de polymères identiques ou différents du copolymère greffé.

L'invention concerne aussi un procédé de synthèse d'un copolymère greffé selon l'invetion, caractérisé en ce qu'il comprend soit (i) une étape de mise en solution de molécules (I) et du copolymère (II) dans un solvant approprié, soit (ii) une étape de mise en contact des molécules (I) avec le copolymère (II) à l'état fondu, sans solvant, dans une extrudeuse, une calandreuse ou tout autre mélangeur.

Le matériau thermoplastique de l'invention est obtenu en faisant réagir :
- des molécules **M-R-X** (I) contenant au moins un motif (M) choisi parmi les motifs (1) à (4) ci-dessous et au moins une fonction (X), de préférence choisie parmi les fonctions amine primaire, amine secondaire et alcool ainsi qu'un espaceur (R) rigide ou flexible.
- avec un copolymère (II) issu de la copolymérisation d'au moins deux monomères, à savoir un monomère styrénique et un monomère comportant une fonction anhydride.

Le copolymère (II) est issu de la copolymérisation d'au moins deux monomères différents à savoir un monomère styrénique, de préférence le styrène et un monomère comportant une fonction anhydride, de préférence l'anhydride maléïque. Ce copolymère (II) est abrégé SMA. Les copolymères SMA peuvent également être issus de copolymèrisations avec un ou plusieurs autres monomères supplémentaires comme par exemple des comonomères acryliques tels que les (méth)acrylates d'alkyle.

Le copolymère (II) est issu de la copolymérisation d'un mélange de monomères comprenant en poids par rapport au mélange total de monomères entre 0,5 et 50%, et de préférence entre 15 et 30% de monomère comportant une fonction anhydride.

Au moment de la réaction entre le copolymère (II) et les molécules (I), se produit l'ouverture des fonctions anhydrides dudit copolymère (II) par la fonction (X) desdites molécules (I). Les molécules (I) se retrouvent greffées par liaison(s) covalente(s) sur la chaîne macromoléculaire dudit copolymère (II). Bien que la stoechiométrie de la réaction puisse être ajustée pour que chaque fonction anhydride du copolymère (II) subisse un greffage, il est préférable, en particulier lorsque le taux de fonctions anhydride dans le copolymère (II) dépasse 5% en poids, que le taux de greffage sur les fonctions anhydride ne soit pas total, autrement dit, il est souvent préférable qu'il reste des fonctions anhydride libres.

La structure du copolymère greffé est, de ce fait, modifiée à l'échelle moléculaire puisqu'au moins quelques chaînes macromoléculaires dudit copolymère comportent des « greffons » , contenant au moins un des motifs (1) à (4) ci-dessous, lesdits «greffons» étant capables de s'associer entre eux par des liaisons physiques réversibles comme des liaisons hydrogène. Il faut une moyenne supérieure à deux « greffons » par chaîne du copolymère (II) pour qu'il y ait la possibilité de formation d'un réseau macromoléculaire constitué grâce à des liaisons hydrogène. Sans que l'explication donnée engage ou limite en rien la porté de l'invention, les interactions physiques réversibles se produisant entre « greffons » portés par des chaînes différentes du copolymère greffé, dites interactions physiques intermoléculaires, sont supposées avoir une contribution décisive sur l'amélioration constatée des propriétés du copolymère greffé par rapport aux propriétés du copolymère non greffé.

**S'agissant de la molécule M-R-X (I)**, elle comporte, réunis dans une même molécule, au moins un motif (M) choisi parmi les motifs (1) à (4) ci-dessous, ledit motif étant capable d'interagir par liaison hydrogène et au moins une fonction (X) capable de former des liaisons covalentes avec le copolymère (II). Le ou les motif(s) (M) et la ou les fonction(s) (X) sont reliés entre eux par une chaîne rigide ou flexible (R).

Parmi les motifs (M), on distingue : 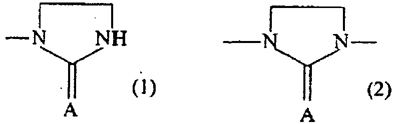 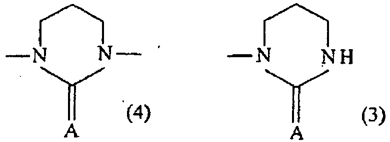 avec A = oxygène, soufre ou NH, avantageusement l'oxygène.

De préférence, il s'agit du motif (1), avec A = oxygène, qui est un hétérocycle de type imidazolidone.

La fonction (X) peut être choisie parmi un halogène, une fonction amine primaire ou secondaire, une fonction alcool ou thiol, une fonction acide carboxylique ou un dérivé de ces fonctions (ester, thioester amide) et une fonction époxy. De préférence, (X) est une fonction amine primaire ou secondaire ou une fonction alcool.

La chaîne rigide ou flexible, (R) peut être une chaîne hydrocarbonée porteuse d'un ou plusieurs hétéroéléments. Il pourra s'agir d'une chaîne hydrocarbonée linéaire ou ramifiée composée de un à 30 atomes de carbone, d'un cycle ou d'une succession d'éléments alkyl ou aryl, unis par des ponts -C(O)O-, OC(O), C(O), -O-, -S-, -NH-. La chaîne R selon l'invention aura une masse moléculaire inférieure à 1000 g/mole et de préférence inférieure à 500 g/mole. Avantageusement, lorsque ces ponts sont présents dans la chaîne (R) et notamment quand il s'agit de ponts amide C(O)NH, ils sont susceptibles de s'associer par liaisons hydrogène.

Eventuellement, la réaction de greffage de la molécule (I) sur la chaîne macromoléculaire du copolymère (II) pourra faire apparaître des groupes associatifs par liaison hydrogène supplémentaires et notamment des ponts amide -C(O)NH- ou - NHC(O)-. Aussi, lorsque le motif X de la molécule (I) est un motif amine, la réaction de greffage de la molécule (I) sur la chaîne macromoléculaire du copolymère (II) pourra donner lieu à des liaisons de type amide ou imide entre le motif X et les groupes carboxyliques des motifs anhydride du copolymère (II).

Les molécules (I) comprenant au moins un motif choisi parmi les motifs (1) à (4) ci-dessus peuvent être issues de la réaction de l'urée avec une molécule contenant au moins une fonction amine primaire (-NH2) et au moins une fonction amine secondaire (- NH-) séparées par au moins 2 atomes de carbone et sont plus particulièrement issues de la réaction de l'urée avec des alkylèneamines, des amines, des aminoalcools ou des amides. De préférence, les molécules (I) sont choisies parmi les molécules (I) comprenant les motifs (1) avec A=oxygène et sont issues de la réaction de l'urée avec une polyalkylèneamine.

On peut citer :
- la molécule UTETA: 1-(2-[(2-aminoéthyl)amino]éthyl)imidazolidin-2-one issue de la réaction de l'urée avec la triéthylène tétramine (TETA) ; 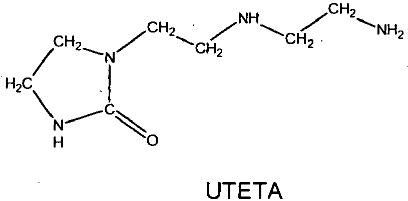
- la molécule UTEPA :1-(2-{2-[(2-aminoéthylamino]éthyl}amino)éthyl]imidazolidin-2-one issue de la réaction de l'urée avec la tétraéthylène pentamine (TEPA) ; 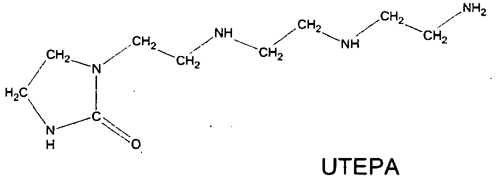
- la molécule UDETA : 2-aminoéthylimidazolidinone ou 1-(2-aminoéthyl)imidazolidin-2-one issue de la réaction de l'urée avec la diéthylène triamine (DETA) ; 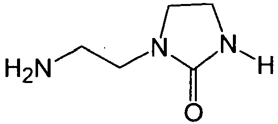
- ainsi que des molécules comme 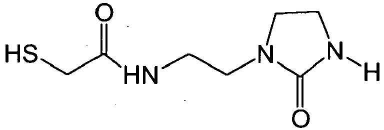 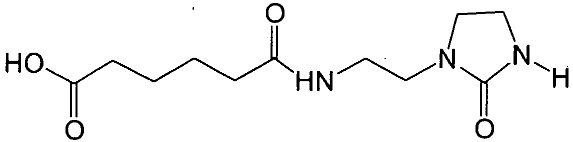 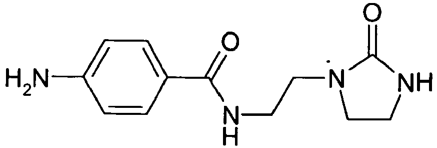
issues, par exemple, de la réaction de l'UDETA avec, respectivement, un thio-acide ou un thio-ester, un di-acide ou un acide-ester et un amino-acide ou un amino-ester.

**S'agissant du copolymère (II)**, il s'agit d'un copolymère obtenu à partir de la copolymérisation d'au moins 2 monomères, (i) le premier monomère étant choisi parmi le styrène et ses dérivés où au moins l'un des hydrogènes aliphatiques ou aromatiques du styrène est substitué comme, par exemple, l'α-méthyl styrène ou le 4-styrène sulfonate et (ii) le second monomère comportant une fonction anhydride tel que, par exemple, l'anhydride maléique.

De préférence, il s'agit d'un copolymère obtenu par copolymérisation du styrène et de l'anhydride maléique.

La réaction entre les molécules (I) et le copolymère (II) peut se faire en solution ou à l'état fondu. Les molécules (1) et le copolymère (II) peuvent être mis en solution dans un solvant approprié, comme le chloroforme, en choisissant la température de réaction de manière à ce que la réaction se produise dans un temps raisonnable allant de quelques minutes a quelques heures. Ou alors, les molécules (I) peuvent être mises en contact avec le copolymère (II) à l'état fondu, sans solvant, et tel que cela peut se faire dans des équipements de transformation de polymères thermoplastiques, bien connus de l'homme du métier, comme des extrudeuses, des calandreuses et autres mélangeurs.

De manière générale, la réaction entre les molécules (I) et le copolymère (II) peut se faire par tout procédé de modification chimique des polymères connu de l'homme de l'art, comme par exemple la modification en solution dans laquelle la réaction est effectuée dans un solvant mutuel du polymère et des réactifs suivie d'un purification par précipitation, la modification à l'état fondu dans laquelle la réaction est effectuée par mise en contact à l'état fondu du polymère et des réactifs dans un outil adapté tel que par exemple mélangeur interne, ou un co-malaxeur discontinu ou continu, ou une extrudeuse monovis, ou bivis contra ou co-rotative.

La nature des interactions physiques intermoléculaires créées par le greffage réalisé selon l'invention fait que la résistance aux solvants usuels du polymère est améliorée tout en laissant la possibilité de re-dissoudre le matériau dans des solvants bien spécifiques comme l'alcool benzylique, alors que l'amélioration de la résistance aux solvants par réticulation chimique interdit toute dissolution possible.

Le copolymère greffé selon l'invention peut être mélangé avec au moins un autre polymère pour constituer des mélanges compatibles au sens thermodynamique ou pour constituer des dispersions bi ou polyphasiques telles que celles qui sont obtenues lorsque le polymère thermoplastique SMA est mélangé avec un polymère susceptible d'apporter, dans le mélange final, la présence d'une phase élastomère capable de renforcer les propriétés de résistance aux chocs du matériau. Parmi les polymères susceptibles d'apporter une phase élastomère dans le mélange on peut citer, à titre d'exemple non exclusif, les polymères ou copolymères du butadiène ou de l'isoprène comme le polybutadiène, comme les caoutchoucs SBR (pour styrène-butadiene rubber) comme les caoutchoucs NBR (pour nitrile butadiene rubber) comme l'ABS (pour copolymère acrylonitrile-butadiène-styrène) comme le MBS (pour copolymère méthyl méthacrylate-butadiène-styrène) comme les copolymères à blocs tels que le SBS (pour polystyrène-polybutadiène-polystyrène), le SIS (pour polystyrène-polyisoprène-polystyrèhe), le SBM (pour polystyrène-polybutadiène-polyméthyl méthacrylate), comme les versions hydrogénées de ces polymères et copolymères à base de butadiène ou d'isoprène.

On peut également citer les polymères ou copolymères élastomères acryliques comme les copolymères de styrène et d'acrylate de butyle ou les copolymères élastomères à base de polyoléfines comme les élastomères copolymères d'éthylène-propylène, comme les élastomères copolymères d'éthylène-propylène-diène, comme le polyisobutylène, comme les élastomères copolymères d'éthylène-propylène modifiés, comme les élastomères copolymères d'éthylène-propylène-diène modifiés (EPDM).

Le copolymère greffé selon l'invention peut aussi être mélangé avec au moins un autre polymère ne contenant pas de phase élastomérique comme par exemple le polystyrène, le SAN (pour copolymère de styrène-acrylonitrile), le SM (pour copolymère de styrène et méthyl méthacrylate).

Le ou les polymères qui peuvent être mélangés avec le polymère greffé de l'invention peuvent éventuellement être eux aussi greffés par des molécules comportant des « greffons » comme ceux de l'invention ou de nature chimique différente. Avantageusement, l'utilisation de polymères comportant des « greffons » susceptibles de former des liaisons hydrogène avec les greffons du polymère de l'invention favorise la qualité du mélange. Le copolymère greffé de l'invention est susceptible de mieux se mélanger avec des pigments, des charges ou d'autres additifs utilisés habituellement dans l'industrie des plastiques que le copolymère de base non greffé. Avantageusement le copolymère de l'invention peut être utilisé dans des mélanges maîtres (en anglais master batches) qui sont des pré-mélanges polymère-additifs à forte concentration d'additifs qui serviront, par dilution dans le polymère à additiver, à mieux disperser lesdits additifs.

Enfin, le copolymère greffé de l'invention peut aussi être utilisé en tant qu'agent compatibilisant entre deux autres polymères d'un mélange.

### Description d'un exemple de réalisation de l'invention :

### Exemple 1 : Greffage d'un copolymère SMA en extrudeuse avec de l'UDETA

Le copolymère SMA avant greffage est un produit ALDRICH contenant 14% en poids d'anhydride maléique. Sa masse moléculaire moyenne en nombre, Mn, est de 85000 g/mole et sa masse moléculaire moyenne en poids, Mw, est de 188000 g/mole. Le greffage est réalisé dans une micro-extrudeuse DSM Micro 15 Compounder sous courant d'azote. Le SMA est préalablement traité à 120°C pendant 12 heures dans une étuve sous vide de manière à reformer les anhydrides susceptibles de s'être hydrolysés. 12 g du SMA sont alors mélangés avec 400 mg d'UDETA de pureté molaire supérieure à 95%. La masse moléculaire de la molécule UDETA servant à greffer le SMA est de 129 g/mole. La température d'extrusion est de 220°C pour des vis tournant à 50 tours par minute. Le matériau garde une bonne processabilité. Le produit extrudé est ensuite introduit dans une machine à injection de marque DACA Instruments avec une température d'injection de 300°C et un moule à 145°C. A titre comparatif, le copolymère SMA non greffé est également injecté à 300°C avec un moule à 140°C.

### Test mécanique en flexion 3 points :

Un test mécanique en mode flexion trois points est alors réalisé sur des barreaux en forme de prisme rectangulaire à l'aide d'un appareil DMA TA 2980. Une rampe de force croissante de 4N/min est appliquée et le module mécanique en flexion est ainsi déterminé. Le SMA greffé UDETA présente un module de 2,0 GPa, alors que le SMA de départ, non greffé, présente un module de 1,5 GPa, ce qui fait un gain de plus de 33%.

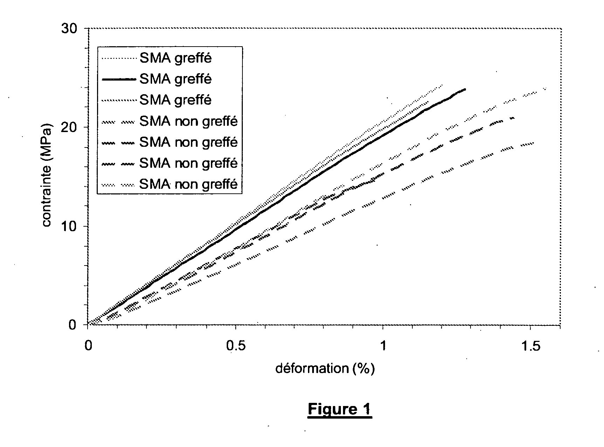

La Figure 1 montre les courbes contrainte-déformation des SMA greffé UDETA, et non greffé selon ce test. La pente supérieure des courbes de contrainte en fonction de la déformation pour les échantillons greffés par rapport aux échantillons non greffés traduit l'augmentation significative du module mécanique.

### Test mécanique en traction :

Un test de traction est effectué dans une machine de traction Instron 5564 à température ambiante et avec une vitesse de traction de 2 mm/min sur des spécimens en forme d'haltère dont la partie centrale mesure 25 mm de longueur pour 4 mm de largeur et 1,6 mm d'épaisseur.

Ce test permet de mettre en évidence une augmentation du module d'Young qui passe de 1,2 GPa pour le SMA non greffé à 1,4 GPa pour le SMA greffé, ce qui fait une amélioration de plus de 16%.

### Test de résistance aux solvants

On pèse 25 mg de SMA non greffé et on les introduit dans un flacon contenant 1 ml de chloroforme. On répète la même opération avec 25 mg de SMA greffé dans 1 ml de chloroforme. Les deux solutions sont mises à agiter. Après 8 heures, le SMA greffé a gonflé, mais n'est pas dissous, alors que le SMA non greffé se dissout rapidement.

Des résultats identiques sont trouvés en reproduisant la même expérience en utilisant du tétrahydrofurane à la place du chloroforme.

On pèse 40 mg de SMA non greffé et on les introduit dans un flacon contenant 2 ml d'alcool benzylique. On répète la même opération avec 40 mg de SMA greffé dans 2 ml d'alcool benzylique. Les deux solutions sont chauffées à 125°C et mises à agiter. Après 1 journée, le SMA greffé s'est dissous en troublant la solution, et le SMA non greffé s'est parfaitement dissous.

### Analyse thermique :

Des échantillons de SMA greffé et SMA non greffé de 10 mg chacun sont analysés par calorimétrie à l'aide d'un appareil DSC TA Q1000 opérant dans le mode T4. Les températures de transition vitreuse de ces deux matériaux sont estimées avec des vitesses d'échauffement et refroidissement de 10°C/min. Le SMA greffé présente une température de transition vitreuse de 5,4°C plus élevée que le SMA non greffé (respectivement 135,5°C et 130,1°C).

### Exemple 2 : Greffage d'un copolymère SMA en extrudeuse avec une plus faible quantité d'UDETA

Le copolymère SMA avant greffage est le même que celui de l'exemple 1. Le greffage est réalisé dans une micro-extrudeuse DSM Micro 15 Compounder sous courant d'azote. Le SMA est préalablement traité à 120°C pendant 12 heures dans une étuve sous vide de manière à reformer les anhydrides susceptibles de s'être hydrolysés. 12 g du SMA sont alors mélangés avec 170 mg d'UDETA de pureté molaire supérieure à 95%. La température d'extrusion est de 220°C pour des vis tournant à 50 tours par minute. Le matériau garde une bonne processabilité. Le produit extrudé est ensuite introduit dans une machine à injection de marque DACA Instruments avec une température d'injection de 300°C et un moule à 140°C.

### Test mécanique en flexion 3 points :

Un test mécanique en mode flexion trois points est alors réalisé sur des barreaux en forme de prisme rectangulaire à l'aide d'un appareil DMA TA 2980. Une rampe de force croissante de 4N/min est appliquée et le module mécanique en flexion est ainsi déterminé. Le SMA greffé présente un module de 1,84 GPa, alors que le SMA de départ présente un module de 1,5 GPa, ce qui fait un gain de plus de 22%.

### Test de résistance aux solvants :

On pèse 25 mg de SMA non greffé et on les introduit dans un flacon contenant 1 ml de chloroforme. On répète la même opération avec 25 mg de SMA greffé dans 1 ml de chloroforme. Les deux solutions sont mises à agiter. Le SMA greffé se dissout mais trouble fortement la solution, alors que la solution avec le SMA non greffé est totalement transparente.

Des résultats identiques sont trouvés en reproduisant la même expérience avec du tétrahydrofuranne.

On pèse 40 mg de SMA non greffé et on les introduit dans un flacon contenant 2 ml d'alcool benzylique. On répète la même opération avec 40 mg de SMA greffé dans 2 ml d'alcool benzylique. Les deux solutions sont chauffées à 125°C et mises à agiter. Après 1 journée, le SMA greffé s'est dissout en troublant très légèrement la solution, et le SMA non greffé s'est parfaitement dissous.

### Analyse thermique :

Des échantillons de SMA greffé et SMA non greffé de 10 mg chacun sont analysés par calorimétrie à l'aide d'un appareil DSC TA Q1000 opérant dans le mode T4. Les températures de transition vitreuse de ces deux matériaux sont estimées avec des vitesses d'échauffement et refroidissement de 10°C/min. Le SMA greffé présente une température de transition vitreuse de 2,7°C plus élevée que le SMA non greffé (respectivement 132.7°C et 130,1°C).

Le copolymère greffé selon l'invention, pur, constitue un nouveau matériau thermoplastique rigide et transparent. Le copolymère greffé selon l'invention, intégré dans une composition, constitue un nouveau matériau thermoplastique transparent, translucide ou opaque. Le copolymère greffé de l'invention, pur ou faisant partie d'une composition constitue un matériau thermoplastique qui, après des étapes de mise en oeuvre bien connues de l'homme du métier (comme l'extrusion, l'injection, le thermoformage, le calandrage) permet la fabrication d'articles en plastique. Lesdits articles peuvent avoir des applications dans tous les domaines d'utilisation des matières plastiques comme le domaine de l'automobile, les transports, l'électricité, l'électronique, l'informatique, le médical, l'emballage, y compris l'emballage alimentaire utilisable en micro-ondes, la décoration, la construction, la mécanique, les jouets, l'électroménager.

Le copolymère greffé selon l'invention peut également jouer un rôle en tant :
- qu'agent de compatibilisation dans une composition comprenant entre autres au moins deux polymères appartenant à des classes polymères différentes.
- que composant d'un mélange maître à concentration élevée en additifs (tels que pigments ou charges) pour l'additivation de polymères ou copolymères identiques ou différents de celui de l'invention.

### Exemple 3 : Greffage en extrudeuse bi-vis d'un grade commercial de SMA par de l'UDETA

Le copolymère SMA avant greffage est un Xiran, produit par la société Polyscope, contenant 22 % en poids d'anhydride maléique. Sa masse moléculaire moyenne en poids, Mw, est de 110 000 g/mol. Le greffage d'UDETA sur SMA est réalisé lors d'un procédé d'extrusion réactive sur extrudeuse bi-vis de type Leistritz LSM30-34, avec un diamètre de 34 mm et un rapport longueur sur diamètre de 30. Le profil de température est réglé à 200 °C plat, le débit à 20 kg/h, et la vitesse de rotation des vis à 300 tours par minute. Le SMA est introduit en trémie et UDETA est injecté en zone 2 à l'aide d'une micro pompe doseuse à membrane (Prominent), le débit est suivi par perte de poids sur une balance. Une zone de dégazage permet d'éliminer d'éventuels composés volatils. L'UDETA, d'une pureté supérieure à 80% en poids, est introduit à raison de 1,5 % en masse, par rapport à l'ensemble SMA-UDETA.. En sortie d'extrudeuse, le produit est refroidi et mis sous forme de granulés. Le SMA est également extrudé seul.

### Analyse infrarouge

Des échantillons de SMA greffé et non greffé sont analysés par spectroscopie infrarouge par ATR sur cristal de Germanium. Le spectromètre est un 460 ESP protégé de Nicolet, la cellule ATR est un Thunderdome de Spectra-tech. La bande d'absorption de l'anhydride située à 1775 cm-1 diminue consécutivement au greffage, alors qu'une bande vers 1705 cm-1 apparaît, ce qui montre que le greffage a bien eu lieu.

### Analyse rhéologique

Des tests en rhéomètre capillaire et rhéomètre rotationnel sont effectués sur des échantillons de SMA greffé et non greffés (tous deux extrudés), tous deux étuvés une nuit sous vide à 150 °C pour éliminer d'éventuels gaz piégés. Ces mesures sont effectuées à 230°C.

rhéomètre capillaire : un rhéomètre capillaire Rheotester de marque Göttfert avec une filière possédant un rapport longueur sur diamètre de 30 est utilisé. Une correction de Rabinowitsch est appliquée pour tous les tests. Les valeurs 1 de viscosité sont présentées dans le tableau 1 ci-dessous :

**Tableau 1**

| | Viscosité à 11 s-1 |
|---|---|
| SMA non greffé | 1483 Pa.s |
| SMA greffé | 2425 Pa.s |

Nous constatons une augmentation de la viscosité aux bas taux de cisaillement consécutivement au greffage.

rhéomètre rotationnel : un rhéomètre rotationnel MCR 301 de marque Physica équipé de plateaux parallèles de 25 mm de diamètre est utilisé en balayage de fréquences. La déformation appliquée varie entre 2% et 6 % afin de rester dans le domaine linéaire. Les modules des viscosités complexes mesurées à deux fréquences sont présentées dans le tableau 2 ci-dessous :

**Tableau 2**

| | Viscosité complexe à 0,628 rad/s | Viscosité complexe à 135 rad/s |
|---|---|---|
| SMA non greffé | 1900 | 591 |
| SMA greffé | 3040 | 610 |

Les viscosités sont quasiment identiques à hautes fréquences mais celle du SMA greffé est très supérieure à celle du SMA non greffé à basses fréquences. La facilité de mise en forme de ces produits (taux de cisaillement élevé) aussi appelée « processabilité » sera peu affectée puisqu'elle est pilotée par la viscosité à hauts taux de cisaillements, alors que des opérations faisant intervenir de faibles taux de cisaillements (comme la tenue en fondu, aussi appelée « meltstrength ») seront fortement modifiées par le greffage ; autrement dit, le SMA greffé s'écoulera moins sous son propre poids.

### Exemple 4 : Greffages en extrudeuse bi-vis d'un grade commercial de SMA avec deux taux différents d'UDETA

Le copolymère SMA avant greffage est un Xiran SZ26080, produit par la société Polyscope, contenant 26 % en poids d'anhydride maléique. Sa masse moléculaire moyenne en poids, Mw, est de 80 000 g/mol. Le greffage d'UDETA sur SMA est réalisé lors d'un procédé d'extrusion réactive sur extrudeuse bi-vis de type Leistritz LSM30-34, avec un diamètre de 34 mm et un rapport longueur sur diamètre de 30. Le profil de température est réglé à 200 °C plat, le débit à 20 kg/h, et la vitesse de rotation des vis à 300 tours par minute. Le SMA est introduit en trémie et UDETA est injecté en zone 2 à l'aide d'une micro pompe doseuse à membrane (Prominent), le débit est suivi par perte de poids sur une balance. Une zone de dégazage permet d'éliminer d'éventuels composés volatils. L'UDETA, d'une pureté supérieure à 80% en poids est introduit à raison de 1,5 % et 3 % en masse. En sortie d'extrudeuse, le produit est refroidi et mis sous forme de granulés.

### Analyse infrarouge

Des échantillons de SMA greffé et des deux SMA non greffés sont analysés par spectroscopie infrarouge par ATR sur cristal de Germanium. Le spectromètre est un 460 ESP protégé de Nicolet, la cellule ATR est un Thunderdome de Spectra-tech. Plus le greffage est important, plus la bande d'absorption de l'anhydride située à 1775 cm-1 diminue, et plus la bande vers 1705 cm-1 augmente, montrant que le greffage a bien eu lieu.

### Analyse thermique

Des échantillons de SMA greffé et non greffé (tous deux extrudés) sont analysés par calorimétrie à l'aide d'un appareil DSC 204F1 de marque Netzsch. Les températures de transition vitreuse de ces deux matériaux sont estimées avec des vitesses d'échauffement et refroidissement de 20 °C/min. La température de transition vitreuse est mesurée lors de la seconde chauffe. Le SMA non greffé a une température de transition vitreuse de 156 °C, comparativement à 158,1 °C pour le SMA greffé à 1,5 % d'UDETA, et à 158,7 °C pour le SMA greffé à 3% d'UDETA.

### Analyse rhéologique

Des tests en rhéomètre capillaire sont effectués sur des échantillons de SMA greffé et non greffés, tous deux étuvés une nuit sous vide à 150 °C pour éliminer d'éventuels gaz piégés. Ces mesures sont effectuées à 230°C. Un rhéomètre capillaire Rheotester de marque Göttfert avec une filière possédant un rapport de sa longueur sur son diamètre de 30 est utilisé. Une correction de Rabinowitsch est appliquée pour tous les tests. Les valeurs suivantes de viscosité sont relevées :

**Tableau 3**

| | Viscosité à 12 s-1 |
|---|---|
| SMA greffé à 1,5% d'UDETA | 2920 Pa.s |
| SMA greffé à 3 % d'UDETA | 3870 Pa.s |

Nous constatons qu'une augmentation du taux de greffage induit une augmentation de la viscosité aux bas taux de cisaillement. Les opérations faisant intervenir de faibles taux de cisaillements (comme la tenue en fondu) seront fortement modifiées par le greffage, plus le SMA sera greffé UDETA, moins il s'écoulera sous son propre poids.

### Exemple 5 : Greffages en extrudeuse bi-vis d'un grade commercial de SMA plus fluide avec deux taux différents d'UDETA

Le copolymère SMA avant greffage est un Xiran SZ22065, produit par la société Polyscope, contenant 22 % en poids d'anhydride maléique. Sa masse moléculaire moyenne en poids, Mw, est de 65 000 g/mol. Le greffage d'UDETA sur SMA est réalisé lors d'un procédé d'extrusion réactive sur extrudeuse bi-vis de type Leistritz LSM30-34, avec un diamètre de 34 mm et un rapport longueur sur diamètre de 30. Le profil de température est réglé à 200 °C plat, le débit à 20 kg/h, et la vitesse de rotation des vis à 300 tours par minute. Le SMA est introduit en trémie et UDETA est injecté en zone 2 à l'aide d'une micro pompe doseuse à membrane (Prominent), le débit est suivi par perte de poids sur une balance. Une zone de dégazage permet d'éliminer d'éventuels composés volatils. L'UDETA, d'une pureté supérieure à 80% en poids, est introduit à raison de 1,5 % et 3 % en masse. En sortie d'extrudeuse, le produit est refroidi et mis sous forme de granulés. Le SMA est également extrudé seul.

### Analyse infrarouge

Des échantillons de SMA greffé et des deux SMA non greffés sont analysés par spectroscopie infrarouge par ATR sur cristal de Germanium. Le spectromètre est un 460 ESP protégé de Nicolet, la cellule ATR est un Thunderdome de Spectra-tech. Plus le greffage est important, plus la bande d'absorption de l'anhydride située à 1775 cm-1 diminue, et plus la bande vers 1705 cm-1 augmente, ce qui montre que le greffage a bien eu lieu.

### Analyse thermique

Des échantillons de SMA greffé et non greffé (tous extrudés) sont analysés par calorimétrie à l'aide à l'aide d'un appareil DSC 204F1 de marque Netzsch. Les températures de transition vitreuse de ces deux matériaux sont estimées avec des vitesses d'échauffement et refroidissement de 20 °C/min. La température de transition vitreuse est mesurée lors de la seconde chauffe. Le SMA non greffé a une température de transition vitreuse de 149,1 °C, comparativement à 152,4 °C pour le greffé à 1,5 % d'UDETA, et à 153,7 °C pour le greffé à 3% d'UDETA.

### Analyse rhéologique

Des tests en rhéomètre capillaire sont effectués sur des échantillons de SMA greffé et sur les deux SMA non greffés à taux différents d'UDETA, tous deux étuvés une nuit sous vide à 150 °C pour éliminer d'éventuels gaz piégés. Ces mesures sont effectuées à 230°C. Un rhéomètre capillaire Rheotester de marque Göttfert avec une filière possédant un rapport de sa longueur sur son diamètre de 30 est utilisé. Une correction de Rabinowitsch est appliquée pour tous les tests. Les valeurs suivantes de viscosité sont relevées :

**Tableau 4**

| | Viscosité à 11 s-1 | Viscosité à 1000 s-1 |
|---|---|---|
| SMA non greffé | 810 Pa.s | 215 Pa.s |
| SMA greffé à 1,5% d'UDETA | 1710 Pa.s | 260 Pa.s |
| SMA greffé à 3 % d'UDETA | 2360 Pa.s | 330 Pa.s |

Nous constatons qu'une augmentation du taux de greffage induit une augmentation de la viscosité, particulièrement importante aux bas taux de cisaillement. Les opérations faisant intervenir de faibles taux de cisaillements (comme la tenue en fondu) seront fortement modifiées par le greffage, plus le SMA sera greffé UDETA, moins il s'écoulera sous son propre poids, alors que les conditions de mise en oeuvre seront affectées dans une moindre mesure, car c'est la viscosité à hauts taux de cisaillement qui pilote l'écoulement lors de la mise en oeuvre.

## Revendications

1. Copolymère greffé issu du greffage :
• d'un copolymère (II) issu de la copolymérisation d'au moins deux monomères, (i) le premier monomère étant choisi parmi le styrène et ses dérivés et (ii) le second monomère comportant au moins une fonction anhydride,
• par des molécules M-R-X (I) comportant au moins un motif (M) choisi parmi les motifs (1) à (4) : 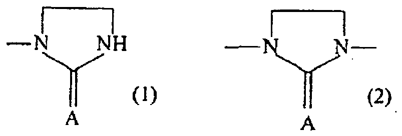 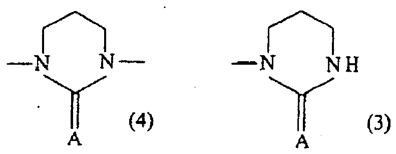 avec A = oxygène, soufre ou NH ;
et comportant au moins une fonction chimique (X) choisie parmi un halogène, une fonction amine primaire ou secondaire, une fonction alcool, une fonction thiol, une fonction acide carboxylique ou un dérivé de cette fonction et une fonction époxy, le motif (M) et ladite fonction (X) étant reliés par une chaîne rigide ou flexible (R).

2. Copolymère greffé selon la revendication 1, **caractérisé en ce que** le copolymère (II) est issu de la copolymérisation d'un mélange de monomères comprenant en poids par rapport au mélange total de monomères entre 0,5 et 50%, et de préférence entre 15 et 30% de monomère comportant une fonction anhydride.

3. Copolymère greffé selon l'une des revendications 1 à 2, **caractérisé en ce que** le monomère comportant une fonction anhydride est l'anhydride maléique.

4. Copolymère greffé selon l'une des revendications précédentes, **caractérisé en ce que** les molécules (I) sont issues de la réaction de l'urée avec au moins un composé choisi parmi les alkylèneamines, les amines, les aminoalcools et les amides.

5. Copolymère greffé selon la revendication 4, **caractérisé, en ce que** les molécules (I) sont issues de la réaction de l'urée avec au moins un composé contenant au moins une fonction amine primaire (-NH2) et au moins une fonction amine secondaire (- NH-), lesdites fonctions étant reliées par une chaîne carbonée comprenant au moins 2 atomes de carbone.

6. Copolymère greffé selon l'une des revendications précédentes, **caractérisé en ce que** la fonction (X) est une fonction amine primaire ou secondaire ou une fonction alcool.

7. Copolymère greffé selon l'une des revendications précédentes, **caractérisé en ce que** le motif (M) de la molécule (I) est le motif (1) qui est un hétérocycle de type imidazolidone avec A=oxygène.

8. Copolymère greffé selon la revendication 7, **caractérisé en ce que** la molécule (I) est choisie parmi la molécule UTETA, la molécule UTEPA et la molécule UDETA.

9. Copolymère greffé selon l'une des revendications précédentes, **caractérisé en ce que** la chaîne (R) est une chaîne alkyle linéaire ou ramifiée composée de un à 30 atomes de carbone, un cycle ou une succession de radicaux alkyl ou aryl unis par des ponts-C(O)O-, OC(O), C(O), -O-, -S-, - NH-.

10. Copolymère greffé selon la revendication 9, **caractérisé en ce que** la chaîne (R) a une masse moléculaire inférieure à 1000 g/mole, et de préférence inférieure à 500 g/mole.

11. Copolymère greffé selon l'une des revendications précédentes **caractérisé en ce que** le nombre moyen de « greffons » est supérieur à 2 « greffons » par chaîne macromoléculaire.

12. Composition greffé comprenant un copolymère selon l'une des revendications 1 à 11 et au moins un autre polymère.

13. Utilisation du copolymère greffé selon l'une des revendications 1 à 11 ou de la composition selon la revendication 12 pour fabriquer des articles destinés aux domaines de l'automobile, des transports, de l'électricité, de l'électronique, de l'informatique, du médical, de l'emballage, y compris l'emballage alimentaire utilisable en micro-ondes, de la décoration, de la construction, de la mécanique, des jouets, de l'électroménager.

14. Utilisation du copolymère greffé selon l'une des revendications 1 à 11 en tant :
• qu'agent de compatibilisation dans des mélanges de polymères
• comme composant d'un mélange maître polymère-additifs utilisé pour l'additivation de polymères identiques ou différents du copolymère greffé selon l'une des revendications 1 à 11.

15. Procédé de synthèse d'un copolymère greffé selon l'une des revendications 1 à 11, **caractérisé en ce qu'**il comprend soit (i) une étape de mise en solution de molécules (I) et du copolymère (II) dans un solvant approprié, soit (ii) une étape de mise en contact des molécules (I) avec le copolymère (II) à l'état fondu, sans solvant, dans une extrudeuse, une calandreuse ou tout autre mélangeur.

## Claims

1. Graft copolymer obtained from the grafting:
• of a copolymer (II) obtained from the copolymerization of at least two monomers, (i) the first monomer being selected from styrene and its derivatives and (ii) the second monomer containing at least one anhydride function,
• with molecules M-R-X (I) containing at least one unit (M) selected from the units (1) to (4): 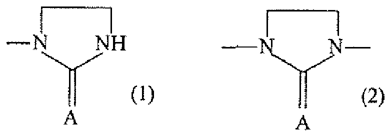 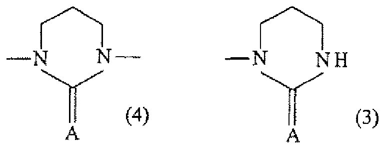 with A = oxygen, sulphur or NH;
and containing at least one chemical function (X) selected from a halogen, a primary or secondary amine function, an alcohol function, a thiol function, a carboxylic acid function or a derivative of this function and an epoxy function, the unit (M) and said function (X) being connected by a rigid or flexible chain (R).

2. Graft copolymer according to Claim 1, **characterized in that** the copolymer (II) is obtained from the copolymerization of a mixture of monomers containing by weight, relative to the total mixture of monomers, between 0.5% and 50%, and preferably between 15% and 30%, of monomer containing an anhydride function.

3. Graft copolymer according to either of Claims 1 and 2, **characterized in that** the monomer containing an anhydride function is maleic anhydride.

4. Graft copolymer according to any of the preceding claims, **characterized in that** the molecules (I) are obtained from the reaction of urea with at least one compound selected from alkylene amines, amines, amino alcohols and amides.

5. Graft copolymer according to Claim 4, **characterized in that** the molecules (I) are obtained from the reaction of urea with at least one compound containing at least one primary amine function (-NH2) and at least one secondary amine function (-NH-), said functions being connected by a carbon chain containing at least two carbon atoms.

6. Graft copolymer according to any of the preceding claims, **characterized in that** the function (X) is a primary or secondary amine function or an alcohol function.

7. Graft copolymer according to any of the preceding claims, **characterized in that** the unit (M) of the molecule (I) is the unit (1), which is an imidazolidone heterocycle with A=oxygen.

8. Graft copolymer according to Claim 7, **characterized in that** the molecule (I) is selected from the molecule UTETA, the molecule UTEPA and the molecule UDETA.

9. Graft copolymer according to any of the preceding claims, **characterized in that** the chain (R) is a linear or branched alkyl chain composed of one to 30 carbon atoms, a ring or a succession of alkyl or aryl radicals joined by bridges -C(O)O-, OC(O), C(O), -O-, -S-, -NH-.

10. Graft copolymer according to Claim 9, **characterized in that** the chain (R) has a molecular mass of less than 1000 g/mol, and preferably less than 500 g/mol.

11. Graft copolymer according to any of the preceding claims, **characterized in that** the average number of grafts is greater than 2 grafts per macromolecular chain.

12. Graft composition comprising a copolymer according to any of Claims 1 to 11 and at least one other polymer.

13. Use of the graft copolymer according to any of Claims 1 to 11 or of the composition according to Claim 12 for manufacturing articles intended for the sectors of vehicles, transport, electricity, electronics, information technology, medicine, packaging, including microwavable food packaging, decoration, construction, mechanics, toys and/or household electricals.

14. Use of the graft copolymer according to any of Claims 1 to 11:
• as a compatibilizer in polymer blends
• as a component of a polymer/additives masterbatch used for additizing polymers which are identical to or different from the graft copolymer of any of Claims 1 to 11.

15. Process for synthesis of a graft copolymer according to any of Claims 1 to 11, **characterized in that** it comprises either (i) a step of dissolving molecules (I) and the copolymer (II) in an appropriate solvent, or (ii) a step of contacting the molecules (I) with the copolymer (II) in the melt state, without solvent, in an extruder, a calender or any other mixer.

## Patentansprüche

1. Pfropfcopolymer, hervorgegangen aus dem Pfropfen:
• eines aus der Copolymerisation von mindestens zwei Monomeren hervorgegangenen Copolymers (II), wobei (i) das erste Monomer unter Styrol und Derivaten davon ausgewählt ist und (ii) das zweite Monomer mindestens eine Anhydridfunktion umfasst,
• mit Molekülen M-R-X (I) mit mindestens einer Einheit (M), die unter den Einheiten (1) bis (4) : 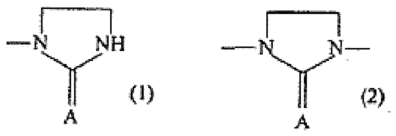 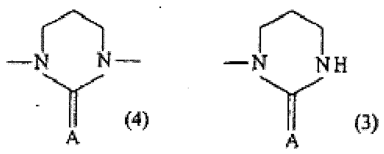 mit A = Sauerstoff, Schwefel oder NH ausgewählt ist,
und mindestens einer chemischen Funktion (X), die unter einem Halogen, einer primären oder sekundären Aminfunktion, einer Alkoholfunktion, einer Thiolfunktion, einer Carbonsäurefunktion oder einem Derivat dieser Funktion und einer Epoxidfunktion ausgewählt ist, wobei die Einheit (M) und die Funktion (X) durch eine starre oder flexible Kette (R) verknüpft sind.

2. Pfropfcopolymer nach Anspruch 1, **dadurch gekennzeichnet, dass** das Copolymer (II) aus der Copolymerisation einer Monomerenmischung mit zwischen 0,5 und 50 Gew.-% und vorzugsweise zwischen 15 und 30 Gew.-%, bezogen auf die gesamte Monomerenmischung, Monomer mit einer Anhydridfunktion hervorgegangen ist.

3. Pfropfcopolymer nach einem der Ansprüche 1 bis 2, **dadurch gekennzeichnet, dass** es sich bei dem Monomer mit einer Anhydridfunktion um Maleinsäureanhydrid handelt.

4. Pfropfcopolymer nach einem der vorhergehenden Ansprüche, **dadurch gekennzeichnet, dass** die Moleküle (I) aus der Umsetzung von Harnstoff mit mindestens einer unter Alkylenaminen, Aminen, Aminoalkoholen und Amiden ausgewählten Verbindung hervorgegangen sind.

5. Pfropfcopolymer nach Anspruch 4, **dadurch gekennzeichnet, dass** die Moleküle (I) aus der Umsetzung von Harnstoff mit mindestens einer Verbindung mit mindestens einer primären Aminfunktion (-NH2) und mindestens einer sekundären Aminfunktion (-NH-), wobei die Funktionen durch eine auf Kohlenstoff basierende Kette mit mindestens 2 Kohlenstoffatomen verknüpft sind, hervorgegangen sind.

6. Pfropfcopolymer nach einem der vorhergehenden Ansprüche, **dadurch gekennzeichnet, dass** es sich bei der Funktion (X) um eine primäre oder sekundäre Aminfunktion oder eine Alkoholfunktion handelt.

7. Pfropfcopolymer nach einem der vorhergehenden Ansprüche, **dadurch gekennzeichnet, dass** die Einheit (M) des Moleküls (I) die Einheit (1), bei der es sich um einen Heterocyclus vom Imidazoltyp mit A = Sauerstoff handelt, ist.

8. Pfropfcopolymer nach Anspruch 7, **dadurch gekennzeichnet, dass** das Molekül (I) unter dem Molekül UTETA, dem Molekül UTEPA und dem Molekül UDETA ausgewählt ist.

9. Pfropfcopolymer nach einem der vorhergehenden Ansprüche, **dadurch gekennzeichnet, dass** es sich bei der Kette (R) um eine lineare oder verzweigte Alkylkette aus einem bis 30 Kohlenstoffatomen, einen Ring oder eine Aufeinanderfolge von Alkyl-oder Arylresten, die durch -C(O)O-, OC(O)-, C(O)-, -O-, -S-, -NH-Brücken verknüpft sind, handelt.

10. Pfropfcopolymer nach Anspruch 9, **dadurch gekennzeichnet, dass** die Kette (R) eine Molmasse von weniger als 1000 g/mol und vorzugsweise weniger als 500 g/mol aufweist.

11. Pfropfcopolymer nach einem der vorhergehenden Ansprüche, **dadurch gekennzeichnet, dass** die mittlere Zahl der "Pfropfungen" mehr als 2 "Pfropfungen" pro makromolekulare Kette beträgt.

12. Pfropfzusammensetzung, umfassend ein Copolymer nach einem der Ansprüche 1 bis 11 und mindestens ein anderes Polymer.

13. Verwendung des Pfropfcopolymers nach einem der Ansprüche 1 bis 11 oder der Zusammensetzung nach Anspruch 12 zur Herstellung von Artikeln, die für den Automobilsektor, Transportsektor, Elektrizitätssektor, Elektroniksektor, Informatiksektor, Medizinsektor, Verpackungssektor einschließlich mikrowellentauglicher Lebensmittelverpackungen, Dekorationssektor, Bausektor, Mechaniksektor, Spielzeugsektor und Elektrohaushaltsgerätesektor bestimmt sind.

14. Verwendung des Pfropfcopolymers nach einem der Ansprüche 1 bis 11 als:
• Verträglichkeitsvermittler in Polymermischungen
• Komponente eines zur Additivierung von Polymeren, die mit dem Pfropfcopolymer nach einem der Ansprüche 1 bis 11 identisch oder davon verschieden sind, verwendeten Polymeradditiv-Masterbatch.

15. Verfahren zur Synthese eines Pfropfcopolymers nach einem der Ansprüche 1 bis 11, **dadurch gekennzeichnet, dass** es entweder (i) einen Schritt des Lösens von Molekülen (I) und Copolymer (II) in einem geeigneten Lösungsmittel oder (ii) einen Schritt des Inberührungbringens der Moleküle (I) mit dem Copolymer (II) in schmelzflüssigem Zustand ohne Lösungsmittel in einem Extruder, einem Kalander oder einem anderen Mischer umfasst.
